(19) Europäisches Patentamt
European Patent Office
Office européen des brevets

(11) Publication number: 0 029 651 A1

# (12) EUROPEAN PATENT APPLICATION

(21) Application number: 80303514.6

(22) Date of filing: 06.10.80

(51) Int. Cl.³: C 08 F 297/08
C 08 F 4/64

(30) Priority: 04.10.79 JP 128166/79

(43) Date of publication of application: 03.06.81 Bulletin 81/22

(84) Designated Contracting States: DE FR GB NL

(71) Applicant: MITSUBISHI CHEMICAL INDUSTRIES LIMITED
5-2, Marunouchi 2-Chome Chiyoda-Ku
Tokyo 100(JP)

(72) Inventor: Hasuo, Masayoshi
122-16, Shirahatanakacho
Kanagawa-ku, Yokohama-shi Kanagawa-ken(JP)

(72) Inventor: Suga, Yoshinori
242-61 Kohgasaka
Machida-shi Tokyo(JP)

(72) Inventor: Kobayashi, Yoshiteru
No. 3031, Noborito
Tama-ku, Kawasaki-shi Kanagawa-ken(JP)

(72) Inventor: Kitada, Hisashi
5-6 Tsutsujigaoka
Midori-ku, Yokohama-shi Kanagawa-ken(JP)

(72) Inventor: Maruyama, Yasuo
23-4 Tanacho
Midori-ku, Yokohama-shi Kanagawa-ken(JP)

(74) Representative: Warden, John C. et al,
R.G.C. Jenkins & Co. Chancery House 53/64 Chancery Lane
London WC2A 1QU(GB)

## (54) Process for producing propylene-ethylene block copolymer.

(57) A propylene-ethylene block copolymer is produced in the presence of a catalytic system essentially comprising an organoaluminum compound and a solid titanium trichloride catalytic complex having an atomic ration of Al to Ti of less than 0.15:1 and including a complexing agent, in three stages of polymerization;

(a) a first stage in which propylene is polymerized in the presence of liquid propylene and hydrogen to produce a propylene homopolymer having a melt flow index of 1 to 60 at a ratio of 70 to 90% by weight based on the total polymers;

(b) a second stage in which the resulting polypropylene is copolymerized propylene and ethylene in the presence of hydrogen and liquid propylene, at a concentration of propylene in the vapor phase, based on the total of propylene and ethylene in the vapor phase, of 50 to 85 mol %, to produce a propylene-ethylene copolymer having a melt flow index of less than 0.1 at a ratio of 3 to 20% by weight based on the total polymers; and

(c) a third stage in which the resulting copolymer is polymerized with ethylene or with and propylene in the presence of hydrogen, with liquid propylene or in the absence of any substantial amount of liquid hydrocarbon, at a concentration of propylene in the vapor phase, based on the total of propylene and ethylene in the vapor phase, of less than 75 mol % and less than the corresponding ratio in said second stage, to produce an ethylene-propylene copolymer having a melt flow index of less than 1 at a ratio of 5 to 20% by weight based on the total polymers.

EP 0 029 651 A1

# PROCESS FOR PRODUCING PROPYLENE-ETHYLENE BLOCK COPOLYMER

The present invention relates to a process for producing a propylene-ethylene block copolymer. More particularly, it relates to an improved process for producing a hetero-block copolymer in which an ethylene-propylene random copolymer is bonded to a polypropylene main chain.

It is know that a hetero-block copolymer can be produced by a two stage polymerization comprising a first stage in which propylene is polymerized in a diluent such as an inert liquid hydrocarbon in the presence of a catalyst comprising titanium trichloride and an organoaluminum compound such as Ziegler-Natta catalyst and a second stage in which ethylene and propylene are random-copolymerized in the presence of the propylene homopolymer.

The titanium trichlorides used by these conventional processes have been obtained by reducing titanium tetrachloride with an organoaluminum compound or a metallic aluminum or further heat-treating and

pulverizing the product, and are usually of the type known as $TiCl_3$-AA. When these titanium trichlorides are used, the polymerization does not proceed satisfactorily and yields a high proportion of non-crystalline polymers as by-products. It is not possible to provide satisfactorily high productivity for a given amount of catalyst because of the low polymerization activity. Therefore, it is necessary to separate catalyst residues from the polymer by dissolving the catalyst residues in a diluent for example by treating a slurry of the polymer with an alcohol, and separating the polymer from the diluent after the polymerization. The non-crystalline by-products are preferably removed from the polymer product because the high rigidity which is one of the important characteristics of polypropylene is lowered by the non-crystalline polymers. The amount of the non-crystalline polymers increases in the copolymerization of propylene-ethylene block copolymers. This causes a decrease in yield of the desired polymer and also the adhesion of rubber-like polymer to the inner wall of the reactor and the aggregation of particles of the polymer which clogs pipes and other parts of the apparatus so that it is difficult to carry out a steady continuous process.

Further processes are required for separating and recovering the alcohol used for the separation of the catalyst residues and the non-crystalline polymers from the diluent, which increases costs.

The advantageous physical characteristics of the block copolymers are remarkably improved impact strength and lack of brittleness at low temperature without any substantial decrease of the high rigidity characteristic of a propylene homopolymer.

As shown in Japanese Examined Patent Publication No. 31119/1972, the impact strength is improved by increasing the ratio of propylene to ethylene in the second stage (the copolymerization). However, the formation of the non-crystalline polymer is also increased. Only 80 to 90% of the desired block copolymer is usually recovered from the diluent solution of the polymers.

It has been proposed to decrease a formation of the non-crystalline polymers and a process in which a crystalline propylene polymer is produced at a ratio of more than 90% by weight based on the total polymers in the first stage is disclosed in Japanese Examined Patent Publication No. 1836/1964. Such a process, forming

an ethylene-propylene random copolymer at a relatively low ratio in the second stage offers little improvement in the impact strength of the resulting block copolymer.

It has been proposed to increase the concentrations of the monomers used, that is, to use liquid propylene as the monomer instead of an inert liquid hydrocarbon as a diluent in order to increase the productivity of the polymer for a given amount of the catalyst. In such a process, the productivity of the polymer per unit of catalyst can be increased. However, it is still not high enough because the polymerization activities are not high when using the conventional titanium trichloride which is obtained by reducing titanium tetrachloride with metallic aluminum and which has a formula of $TiCl_3 \cdot 1/3\ AlCl_3$ (so-called $TiCl_3$-AA). As is disclosed in Japanese Examined Patent Publication No. 32414/1971, the productivity of the polymer is only about 5 kg, per 1 g. of titanium trichloride.

Moreover, it is difficult to increase the content of ethylene component in the ethylene-propylene random copolymer since the random copolymerization of ethylene and propylene is carried out in the liquid propylene as one of the comonomers. Various

processes for increasing the content of the ethylene component have been proposed. For example, in Japanese Examined Patent Publication No. 10116/1978, a random copolymerization of ethylene and propylene is carried out at a low temperature of -45.6 to 23.9$^0$C (-50 to 75$^0$F) in the second stage, to increase the content of the ethylene component. When the copolymerization is carried out at such low temperatures, the polymerization velocity is remarkably low and special cooling apparatus is needed to maintain the reactor at low temperature. This is uneconomical and impractical for an industrial operation.

In Japanese Examined Patent Publication No. 32414/1971, the vapor phase is discharged from the reactor and a new vapor phase is fed into the reactor in the random copolymerization of ethylene and propylene in the second stage to increase the content of the ethylene component. In this process a compressor for recycling the vapor phase is needed.

The inventors have sought to develop an industrial process for a block-copolymerization in liquid propylene in a main stage to increase the content of ethylene component in the ethylene-propylene random copolymer formed in the second stage.

It is an object of the present invention to provide a process for producing a propylene-ethylene block copolymer which has excellent powdery characteristics, in which the formation of non-crystalline polymers is minimized and the separation of a catalyst residue is simplified or eliminated, by using a specific catalyst having high catalytic activity.

It is another object of the present invention to provide a process for producing a propylene-ethylene block copolymer which has excellent characteristics such as high rigidity, high impact strength, low brittle point temperature and good surface characteristics (texture of surface) when melt extruded, by selecting the concentrations of propylene in the vapor phase in the two stages and using hydrogen as a molecular weight regulating agent in both stages.

The present invention provides a process for producing a propylene-ethylene block copolymer in the presence of a catalytic system essentially comprising an organoaluminum compound and a solid titanium trichloride catalytic complex at an atomic ratio of Al to Ti of less than 0.15:1, and including a complexing agent, in two stages of polymerization as follows:

(a) a first stage in which propylene is polymerized

in the presence of a liquid propylene and hydrogen to produce a propylene homopolymer having a melt flow index of 1 to 150 at a ratio of 70 to 95% by weight based on the total polymers; and

(b) a second stage in which the polypropylene from stage (a) is copolymerized with propylene and ethylene in the presence of hydrogen and liquid propylene at a concentration of propylene in the vapor phase, based on the total of propylene and ethylene in the vapor phase, of 50 to 85 mol % and at a concentration of hydrogen in the vapor phase, based on the total of propylene and ehtylene in the vapor phase, of 0.5 to 30 mol% to produce an ethylene-propylene copolymer having a melt flow index of $10^{-7}$ to 0.1 at a ratio of 5 to 30% by weight based on the total of polymers.

The solid titanium trichloride catalytic complex used as a catalyst in the present invention has an atomic ratio of Al to Ti of less than 0.15:1, preferably less than 0.1:1 and especially less than 0.02:1 and includes a complexing agent. The complexing agent is usually incorporated at a molar ratio of more than 0.001, preferably more than 0.01 based on $TiCl_3$ in the solid titanium trichloride catalytic complex. Preferably it comprises titanium trichloride and an aluminum halide having the formula

$AlR^3_pX_{3-p}$

($R^3$ represents a $C_1$ - $C_{20}$ hydrocarbon moiety and X represents a halogen atom and $0 \leq p \leq 2$) at an atomic ratio of Al to Ti of less than 0.15 and the complexing agent at a molar ratio of more than 0.001 based on a total of the aluminum halide and titanium trichloride. For example, it is shown by the formula

$TiCl_3(AlR^3_pX_{3-p})_x \cdot (C)_y$

wherein $R^3$ represents a $C_1$ - $C_{20}$ hydrocarbon moiety; X represents a halogen atom; $0 \leq p \leq 2$; C represents a chelating agent; x is less than 0.15 and y is more than 0.001. It is possible to incorporate a small amount of iodine, a compound formed by substituting a part or whole of chlorine atom of titanium trichloride with iodine or bromine; a inorganic carrier made of $MgCl_2$ or MgO; polyolefin powder such as polyethylene and polypropylene beside $TiCl_3$ component, $AlR^3_pX_{3-p}$ component and the complexing agent C.

Suitable complexing agents C include ethers, thioethers, ketones, carboxylic esters, amines, carboxylic amides, and polysiloxanes. The ethers and thioethers are especially preferable. The ethers and thioethers are particularly compounds having the formula

$R^4$-O-$R^5$ or $R^4$-S-$R^5$

wherein $R^4$ and $R^5$respectively represent hydrocarbon moieties having 15 or less of carbon atoms. The particular compounds are shown in below.

The typical compounds of $AlR^3_pX_{3-p}$ include $AlCl_3$ and $AlR^3Cl_2$.

The solid titanium trichloride catalytic complex used in the process of the present invention is preferably a compound which has halo having the maximum intensity at the position corresponding

to the peak position of the α type titanium trichloride (2θ=about 32.9°C) in its X-ray diffraction. Moreover, it is preferably the solid titanium trichloride catalytic complex produced without heating at a temperature of higher than 150°C. Furthermore, it is preferably to use the solid titanium trichloride catalytic complex having integrated micropore volume of more than 0.02 $cm^3/g$. especially from 0.03 to 0.15 $cm^3/g$. in pore radii of 20 to 500Å measured by a mercury porosimeter which has fine micropores and a specific integrated micropore volume. whereby a separation of non-crystalline polymers can be eliminated.

The solid titanium trichloride catalytic complexes can be easily produced by the following processes:

(a) it is precipitated from a solution of titanium trichloride component dissolved with the ether or the thioether at a temperature of lower than 150°C; or

(b) it is obtained by treatments of a solid titanium trichloride obtained by reducing titanium tetrachloride with an organoaluminum compound and a metallic aluminum, by using a complexing agent and a halide.

The process (a) is known. The solution of titanium trichloride component can be obtained by the following processes:

(A) a process for reducing titanium tetrachloride as the starting material with an organic aluminum in the presence of the ether or the thioether if desired with a desired hydrocarbon; or

(B) a process for treating a solid titanium trichloride as the starting material with the ether or the thioether if desired, with a desired hydrocarbon.

The ethers and thioethers are described above and preferably the compounds having the above-indentified formula

$$R^4\text{-O-}R^5 \quad \text{or} \quad R^4\text{-S-}R^5$$

wherein $R^4$ and $R^5$ respectively represents an alkyl group preferably a straight alkyl group; such as ethyl, n-propyl, n-butyl, n-amyl,

n-hexyl, n-heptyl, n-octyl, n-decyl and n-dodecyl group; an alkenyl group preferably a straight alkenyl group such as butenyl and octenyl group; a aryl group such as tolyl, xylyl and ethylphenyl group; and an aralkyl group such as benzyl group. The optimum ethers and thioethers include dialkyl ethers, dialkenyl ethers, alkyl alkenyl ethers and dialkyl thioethers.

Suitable hydrocarbon solvents include saturated aliphatic hydrocarbons such as n-pentane, n-hexane, n-heptane, n-octane, n-dodecane, and liquid paraffin; alicyclic hydrocarbon such as cyclohexane and methylcyclohexane; and aromatic hydrocarbons such as benzene, toluene and xylene. This is mainly selected depending upon the kind of the ether. For example, when the ether or thioether having a $C_3$ - $C_5$ alkyl or alkenyl group as at least one of $R^4$ and $R^5$ of the formula is used, an aromatic hydrocarbon is preferably selected or an alicyclic hydrocarbon can be selected. When the ether or thioether having an alkyl or alkenyl group having 6 or more carbon atoms as $R^4$ and $R^5$ of the formula is used, a saturated aliphatic hydrocarbon is preferably selected.

The organoaluminum compound used in the process (A) can be the compounds having the formula

$$AlR^6_qX_{3-q}$$

($R^6$ represents a $C_1$ - $C_{20}$ hydrocarbon moiety; q is 1 to 3; X represents a halogen atom). The organoaluminum compound is used at a molar ratio of Ti in titanium tetrachloride to the hydrocarbon moiety ($R^6$) in the organoaluminum compound of 1 : 0.1 to 1 : 50 preferably 1 : 0.3 to 1 : 10. The ether or thioether is used at a molar ratio of ether to titanium tetrachloride of 1 : 0.05 to 1 : 5 preferably 1 : 0.25 to 1 : 2.5. The reduction is not critical. The three components are mixed in a desired order at a temperature of 0 to about 50°C to form the solution.

When a small amount of iodine, titanium tetraiodide or titanium tetrabromide is incorporated at a molar ratio of about 0.005 to 0.3 based on titanium tetrachloride, the precipitated solid titanium trichloride catalytic complex has remarkably high catalytic activity to produce a polymer having high isotactic property.

The solid titanium trichloride used in the process (B) can be titanium trichloride obtained by reducing titanium tetrachloride with hydrogen gas or aluminum preferably titanium trichloride obtained by reducing titanium tetrachloride with an organoaluminum compound.

The ether or thioether is usually used at a molar ratio of titanium trichloride to the ether or thioether of 1 : 1 or more preferably 1 : 1 to 5. The treatment with the ether or thioether is usually carried out at 0 to 100°C preferably about 20 to 50°C.

In the process (a), the fine solid titanium trichloride catalytic complex is precipitated from the solution of the titanium trichloride component dissolved in the process (A) or (B) at a temperature of 150°C or lower. The process is not critical. The solution is heated, if desired after admixing with a hydrocarbon diluent, at a temperature of lower than 150°C usually 20 to 150°C preferably 40 to 120°C especially 60 to 100°C to precipitate it. When the molar ratio of a total of Ti component and Al component to the ether or thioether in the solution of titanium trichloride component is less than 1, the precipitation can be promoted by adding a liberating agent i. e. a precipitating agent. The precipitating agent can be compounds having a function for precipitating a solid titanium trichloride by reacting with the ether or thioether component which is complexed to titanium trichloride in the solution, for example, Lewis acids having acidity of higher than that of titanium trichloride, such as titanium tetrachloride, boron

trifluoride, boron trichloride, vanadium tetrachloride, aluminum trichloride, alkylaluminum dihalide, alkylaluminum sesquihalide, and dialkylaluminum halide. It is optimum to use titanium tetrachloride, aluminum halides such as aluminum trihalides, and alkylaluminum dihalides. The precipitating agent is preferably used at a ratio of less than 5 mole times of Ti component in the solution.

The process (b) is known and will be described in detail.

Titanium tetrachloride is reduced with an organoaluminum compound or a metallic aluminum.

The organoaluminum compound can be the compounds having the formula shown in the process (A) for the process (a). The reduction can be carried out by the known process. When titanium tetrachloride is reduced with the organoaluminum compound, the organoaluminum compound is added to a diluent at a molar ratio of more than 1 preferably 1 to 10 based on titanium tetrachloride at a temperature of about -50°C to 30°C and heated to a temperature of -10 to 100°C to complete the reaction.

When a metallic aluminum is used for the reduction, the metallic aluminum is added to titanium tetrachloride in a diluent such as xylene at a ratio of 0.1 to 1 g. atom of the metallic aluminum to 1 mol. of titanium tetrachloride with a small amount of $AlCl_3$ with or without a diluent such as xylene and the mixture is heated to 80 to 300°C preferably 100 to 200°C.

In the process (b), the resulting solid titanium trichloride is treated with a complexing agent and with a halide.

The complexing agent can be the above-mentioned compounds C. The halides can be titanium tetrachloride and carbon tetrachloride. The treatment with the complexing agent and the halide can be simultaneously carried out or sequentially carried out such as the halide treatment followed by the complexing treatment.

The complexing treatment is usually carried out by adding the complexing agent at a molar ratio of 0.2 to 3 based on $TiCl_3$, to the solid titanium trichloride in the diluent at a temperature of -20 to 80°C. After the complexing treatment, the solid is preferably separated and washed. The treatment with a halide is usually carried out in a diluent at a temperature of -10 to 50°C. The halide is usually used at a molar ratio of 0.1 to 10 preferably 1 to 5 based on $TiCl_3$. After the treatment with the halide, the resulting solid product is preferably separated and washed.

The solid titanium trichloride catalytic complex used in the process of the present invention is preferably produced by the process (a) or (b). In order to produce the catalytic complex having the specific integrated micropore volume, it is preferably produced by the process (a) especially the process (a) with the process (A).

Beside the processes (a) and (b), it is possible to produce the catalytic complex by reducing titanium tetrachloride with an organoaluminum compound and adding the ether at a molar ratio of 0.5 to 5 to the resulting solid titanium trichloride and heating it at 50 to 150°C and separating the solid product as disclosed in Japanese Unexamined Patent Publication No. 123796/1976.

In the process of the present invention, the solid titanium trichloride catalytic complex is used as the catalyst.

It is not suitable to use, as the catalyst, the pure titanium trichloride ($TiCl_3$) obtained by a hydrogen reduction of titanium tetrachloride, titanium trichloride-aluminum trichloride eutectic crystal ($TiCl_3$ 1/3 $AlCl_3$) obtained by reducing titanium tetrachloride with aluminum or mechanically pulverized titanium trichloride.

The organoaluminum compound as the cocatalyst is preferably the compound having the formula

$AlR^1_nCl_{3-n}$

($R^1$ represents a $C_1$ - $C_{20}$ hydrocarbon moiety; n is 1.95 to 2.10). It is possible to use diethylaluminum monochloride having ethyl group as $R^1$ and 2 of n. Thus, it is preferably to use the compounds having n-propyl group or n-hexyl group as $R^1$. When $R^1$ is n-propyl or n-hexyl group, it is important that n is in a range of $1.95 \leq n \leq 2.10$. When the specific organoaluminum compound is combined with the solid titanium catalytic complex, a polymerization activity is remarkably high and an isotactic property is remarkably high. When the organoaluminum compound having $n > 2.10$ is combined, the isotactic property is inferior though the polymerization activity is superior. When the organoaluminum compound having $n < 1.95$ is combined, the polymerization activity is inferior though the isotactic property is superior. Both of them are not preferable.

The organoaluminum compound as the cocatalyst can be the mixture of the compounds having n-propyl group and n-hexyl group as $R^1$.

The organoaluminum compounds used as the cocatalyst can be produced by the known processes, for example, a reaction of aluminum trichloride with tri-n-propylaluminum or tir-n-hexylaluminum; or a reaction of a compound having the formula

$AlR^2_mCl_{3-m}$

($R^2$ represents n-propyl or n-hexyl group and $0 < m < 3$) with tri-n-propylaluminum, tri-n-hexylaluminum or aluminum trichloride. It is also possible to combine these processes by reacting aluminum trichloride with tri-n-propylaluminum or tri-n-hexylaluminum to produce the compound having the formula

$AlR^2_mCl_{3-m}$

(m is about 0.9 to 2.1) and then, reacting it with a small amount of

tri-n-propylaluminum, tri-n-hexylaluminum or aluminum trichloride to produce the compound having a desired value of n.

The reaction temperature is in a range of the ambient temperature to 150°C preferably 50 to 100°C and a reaction time is in a range of several min. to several hr. preferably 1 to 2 hr. The reaction can be carried out without any medium. It is possible to react them in a desired medium such as aliphatic hydrocarbons such as n-hexane and n-heptane; aromatic hydrocarbons such as toluene and xylene; alicyclic hydrocarbons such as cyclohexane and methyl cyclohexane.

When a mixture of trialkylaluminums having the different alkyl groups in $AlR^2_mCl_{3-m}$ is used as the reagent for the second reaction, a mixture of compounds having n-hexyl group and n-propyl group are obtatained. After the reaction, the product can be used as the cocatalyst however, it is preferably used after a purification by a distillation under a reduced pressure.

In the process of the present invention, an electron donor as the third component beside the catalyst and the cocatalyst whereby the isotactic property of the polymer can be improved without lowering the polymerization activity.

The electron donors can be compounds having one or more electron donor atom or group such as ethers, polyethers, alkylene-oxides, furan, amines, trialkylphosphines, triarylphosphines, pyridines, quinolines, phosphoric esters, phosphoric amides, phosphineoxides, trialkylphosphite, triarylphosphites, ketones, carboxylic esters and carboxylic amides. It is preferable to use carboxylic esters such as ethyl benzoate, methyl benzoate and phenyl acetate; glycine esters such as dimethylglycine ethyl ester and dimethylglycine phenyl ester; and tri-arylphosphites such as triphenylphosphite and trinonylphosphite etc.

As ratios of the catalyst components, a molar ratio of $TiCl_3$ in the solid titanium trichloride catalytic complex to the organoaluminum compound is in a range of 1 : 1 to 100 preferably 1 : 2 to 40. When the third component is used, a molar ratio of $TiCl_3$ to the third component is in a range of 1 : 0.01 to 10 preferably 1 : 0.05 to 2. Aromatic hydrocarbons such as benzene, toluene and xylene can be used as the third component for the catalyst.

The solid titanium trichloride catalytic complex used as the catalyst, can be use without any treatment, and it is preferable to use it after a pretreatment with a small amount of an olefin such as propylene and ethylene in the presence of an organoaluminum compound. The pretreatment is effective for improving physical properties of a slurry of the polymer such as a bulk density.

The temperature in the pretreatment is lower than the polymerization temperature and is usually in a range of 20 to 60°C. The pretreatment is carried out to provide a ratio of the polymer produced by the pretreatment to $TiCl_3$ in the solid titanium trichloride catalytic complex of 0.1 to 50 : 1 by weight preferably 1 to 20 : 1 by weight.

In the process of the present invention, the production of a propylene-ethylene copolymer with the catalyst system comprising the solid titanium trichloride catalytic complex and the organoaluminum compound, is carried out in three stages. In the first stage, a homopolymerization of propylene is carried out in the presence of liquid propylene. It is preferable to use an inert liquid hydrocarbon such as aliphalic hydrocarbons such as hexane and heptane; alicyclic hydrocarbons such as cyclohexane; and aromatic hydrocarbons such as benzene and toluene to charge the solid titanium trichloride catalytic complex and the organoaluminum compound into the reactor. A small amount of the inert liquid hydrocarbon can be incorporated with the

liquid propylene. The polymerization temperature and time are selected so as to give 70 to 90% by weight of propylene homopolymer in the total amount of the polymers. The polymerization temperature is usually in a range of 40 to 100°C preferably 55 to 80°C. The polymerization pressure is a sum of a vapor pressure of the liquid propylene, a pressure of hydrogen as the molecular weight regulating agent, and a vapor pressure of the inert liquid hydrocarbon used as the diluent for the catalyst components and it is usually in a range of 30 to 40 kg. /$cm^2$. A polymerization temperature and an amount of the molecular weight regulating agent arc selected to produce the propylene homopolymer having a melt flow index of 1 to 60 in the first stage. (The melt flow index is measured by ASTM D1238-70 as a rate of extrusion (g. /10 min.) at 230°C under a pressure of 2.16 kg. and is referred to as MFI.) The molecular weigh regulating agent can be hydrogen and dialkyl zinc etc. preferably hydrogen. A concentration of hydrogen in the vapor phase is usually in a range of about 1 to 20 mol %.

In the second stage, a random copolymerization of propylene and ethylene is carried out in the presence of the propylene homopolymer obtained in the first stage and liquid propylene. A concentration of propylene in the vapor phase is in a range of 50 to 85 mol % which is the condition for forming non-crystalline polymers at highest ratio, but the condition for improving an impart strength of the final product in the highest level. In such condition, the powdery block copolymer having high bulk density and high free fluidity can be obtained without substantially adhereing on the inner wall of the reactor in the present invention. When the concentration of propylene in the vapor phase is more than 85 mol %, especially more than 95 mol %, or less than 50 mol %, an improvement of the impact strength is not satisfactory. When the polymerization is carried out

in a concentration of propylene in the vapor phase of 50 to 85 mol %, a content of propylene component in the resulting random copolymer of propylene and ethylene is in a range of 30 to 70% by weight (22 to 61 mol %). The polymerization temperature and time are selected to produce the random copolymer of propylene and ethylene at a ratio of 3 to 20% by weight of the total of the polymers. When it is less than 3% by weight, the improvement for impact strength is not enough high. When it is more than 20% by weight, a bulk density and a free fluidity of the powder are deteriorated to give lower rigidity and tansparency and to give a large shrinkage of a molded product. The ratio of the polymer in the second stage is preferably smallest among those of the polymers in the first, second and third stages. The polymerization temperature is usually selected from the range of 30 to 70°C preferably 40 to 60°C. The polymerization pressure is a sum of the vapor pressure of the liquid propylene, the pressures of hydrogen and ethylene and the vapor pressure of the inert liquid hydrocarbon at the polymerization temperature and is usually in a range of 20 to 40 kg. $/cm^2$. The content of hydrogen as the molecular weight regulating agent and the polymerization temperature are selected so as to produce a random copolymer of propylene and ethylene having MFI of lower than 0.1. When MFI is higher than 0.1, the improvement of the impact strength is not satisfactory. The concentration of hydrogen in the vapor phase is usually in a range of 0.01 to 10 mol %. As described above, when hydrogen is not present, shark skin surface is formed on the molded product.

In the third stage, a random copolymerization of ethylene and propylene is carried out in the presence of the propylene-ethylene copolymer obtained in the second stage in the presence of liquid propylene or in the absence of liquid hydrocarbon such as liquid propylene. The polymerization in the presence of liquid propylene

can be carried out by a conventional slurry polymerization process. The polymerization in the absence liquid hydrocarbons such as liquid propylene and inert hydrocarbon liquid medium, is carried out by a gas phase polymerization in which ethylene and propylene gases directly contact with the catalyst. The concentration of propylene in the vapor phase is lower than that of the second stage and lower than 75 mol %, preferably lower than 50 mol %, especially 10 to 50 mol %. When the concentration of propylene in the vapor phase is higher than 75 mol %, physical properties of the object polymer can not be improved and the bulk density of the powdery copolymer is lowered and the aggregation of particles of the polymer is caused. On the other hand, when the concentration of propylene is higher than 10 mol %, the operation can be continued without removing propylene after the second stage without decreasing excellent physical properties of the polymer as that of zero mol %. The polymerization temperature and pressure and time are selected so as to produce 5 to 20% by weight of the propylene-ethylene random copolymer having ethylene component as the major component based on the total of the polymers in the third stage. When it is less than 5% by weight, the improvement of brittleness at low temperature is not enough high. When it is more than 20% by weight, transparency of a molded product is inferior. The polymerization temperature is usually in a range of 0 to 100°C and preferably 60 to 90°C in the gas phase polymerization and 20 to 50°C in the slurry polymerization in the liquid propylene.
The polymerization pressure is usually in a range of 1 to 50 kg. $/cm^2$. The polymerization temperature and the concentration of hydrogen as the molecular weight regulating agent are selected to produce the propylene-ethylene random copolymer having MFI of less than 1 preferably less than 0. 1. The concentration of hydrogen in the vapor phase is usually in a range of 1 to 150 mol % in the gas phase

polymerization and in a range of 0.01 to 30 mol % in the slurry polymerization in liquid propylene. When MFI is more than 1, the effect for improving the impact strength is not enough high.

The polymerization can be carried out by a continuous system or a batch system.

In the continuous system, different reactors are used for the polymerizations in the stages. The transferring of the slurry of the polymer between the reactors is preferably carried out under a pressure difference or a head difference. The polymerization pressures in the reactors in the stages are preferably selected to be the order of 1st stage ≥ 2nd stage ≥ 3rd stage. The pressure in the first or second stages can be increased by charging an inert gas such as nitrogen or argon.

The propylene-ethylene block copolymer obtained by the process of the present invention has high crystallinity with a smaller formation of non-crystalline polymers and accordingly, it is unnecessary to remove the non-crystalline polymers. The block copolymer product has excellent impact strength and rigidity and brittleness at low temperature even though the non-crystalline polymers are not removed. A productivity of the propylene-ethylene block copolymer is more than 16000 g. especially more than 22000 g. per 1 g. of $TiCl_3$ of the catalyst. Therefore, the catalyst residue of $TiCl_3$ remained in the block copolymer product is less than 19 ppm especially less than 14 ppm as Ti. It is unnecessary to remove the titanium component. After the polymerization in the third stage, the powdery propylene-ethylene block copolymer has a powder having excellent free fluidity. It is unnecessary to remove the non-crystalline polymers and the Ti component of the catalyst residue, whereby it is unnecessary to use an inert liquid hydrocarbon or alcohol.

After the polymerizations, the powdery block copolymer can be used by itself in the gas phase polymerization. All of liquid propylene is vaporized or the block copolymer is separated by a precipitation and then liquid propylene is vaporized in the slurry polymerization in liquid propylene. That is, the powdery copolymer is obtained without substantially washing it. This can be directly pelletized or pelletized after a simple treatment contacting a small amount of a gaseous alkyleneoxide with the powdery copolymer at 80 to 120°C for several min. as disclosed in Japanese Unexamined Patent Publication No. 25888/1977 so as to remove chlorine in the catalyst residue. The powdery copolymer can be used as the powder grade product without any pelletization.

In a continuous stable operation for a long time by the process of the present invention, the powdery characteristics of the powdery copolymer containing the catalyst residue in the polymerization system should be a bulk density of more than 0.35 g./$cm^3$ preferably 0.40 g./$cm^3$ at 30 to 130°C and a repose angle of 30 to 50° preferably 30 to 45° and a slip angle of 25 to 50° preferably 25 to 43° and an average particle diameter of more than 100$\mu$ preferably more than 200$\mu$.

In order to produce the powdery copolymer, the solid titanium trichloride catalytic complex obtained by the process (a) or (b) especially the process (a) can be used.

The repose angle and the slip angle can be measured on a ground stainless steel plate as the angle for maintaining the stable state and the angle for initiating the slippage as described in Shin Kagaku Kogaku Koza published by Nikkan Kogyo News Paper Co. Vol. 18 page 5 to 8.

The invention will be further illustrated by the following Examples and References which are provided herein for purpose of illustration only, and are not to be construed as limiting in any manner.

In the Examples, the symbols and the measurements used are as follows.

The catalystic efficiency CE (g./g.) is defined as the yield of the copolymer g. per 1 g. of $TiCl_3$ of the catalyst.

The isotactic index I.I. (%) is defined as the weight percentage of solid residue (wt.%) remaining after an extraction with boiled n-heptane for 6 hr. by an improved Soxhlet extractor. The non-crystalline polymers are soluble in the boiled n-heptane and accordingly, I.I (%) shows the yield of the crystalline polymer.

The bulk density $\rho_B$ (g./cc.) is measured by Japanese Industrial Standard-6721.

The content of the ethylene component in the copolymer $[E]_{IR}$ (%) is measured as the ratio of the peak value at 4396 $cm^{-1}$ to the peak value at 4325 $cm^{-1}$ in an infrared spectrum of a press-sheet having a thickness of 0.2 mm.

The melt flow index MFI (g./10 min). is measured by ASTM D-1238-70 at 230$^0$C under a pressure of 2.16 kg as a rate of extrusion.

The density $\rho$(g./cc.) is measured by a density gradient tube process pursuant to ASTM-D 1505.

The first yield strength YS (kg./cm$^2$) is measured by a tensile test of a dumbbell specimen obtained by punching from a pressed sheet having a thickness of 1.0 mm pursuant to ASTM D-638-72. This is measured at 20$^0$C unless otherwise specified.

The Izod impact strength (kg.cm/cm) is measured using a notched rectangular specimen obtained by punching from a pressed sheet having a thickness of 5.0 mm pursuant to ASTM D-256. This is measured at 20$^0$C unless otherwise specified.

The breaking point elongation (%) at a welded part is measured by a tensile strength test for a two point gate dumbbell specimen having a thickness of 3 mm obtained by an injection molding machine (1 ounce). This corresponds to the strength at the welded part.

The brittle point temperature $T_b$ ($^0$C) is measured using a specimen obtained by punching a flat sheet having a thickness of 2.0 mm obtained by an injection molding machine (1 ounce) pursuant to ASTM D-746.

In the following Examples and References, MFI in the second stage is measured after the independent polymerization in the second stage. When MFI is more than 0.001, it is measured pursuant to D-1238-70. When MFI is lower than 0.001 $[\eta]$ is measured and MFI is calculated from the relationship of MFI to $[\eta]$.

The concentration of propylene in the vapor phase is shown in mol % as the molar ratio of propylene to the total of propylene and ethylene in the vapor phase. The concentration of hydrogen in the vapor phase is shown in mol % as the molar ratio of hydrogen to the total of propylene and ethylene in the vapor phase.

The tensile impact strength is measured pursuant to ASTM D-1822.

In the following Examples and References, MFI in the second stage and in the third stage is measured after the independent polymerization in the second stage or the third stage.

Preparation of Catalyst 1:

Preparation of solid titanium trichloride type catalytic complex:

(A) Preparation of solution of titanium trichloride:

Into a 500 mℓ. four necked flask dried and purged with argon, 120 mℓ. of n-heptane and 100 m mol of $TiCℓ_4$ were charged and then 90 m mol of di-n-octyl ether was added and the mixture was stirred at 25°C and a solution of 33 m mol of diethylaluminum monochloride in 50 mℓ. of n-heptane was gradually added dropwise to obtain a greenish black-brown solution of titanium trichloride in n-heptane.

(B) Preparation of precipitation of titanium trichloride and preparation of catalyst:

The solution of titanium trichloride obtained in the step (A) was heated to 95°C during the heating step, a precipitation of titanium trichloride having purple color was found. After stirring the solution at 95°C for 30 min., the precipitate was separated by a filtration and washed with 100 mℓ. of n-heptane for two times. The precipitate was further washed with 100 mℓ. of toluene for 3 times to obtain fine purple solid titanium trichloride type catalytic complex.

According to an elementary analysis, the catalytic complex had a formula $TiCℓ_3(AℓCℓ_3)_{0.003}[(n\text{-}C_8H_{17})_2O]_{0.10}$.

According to a measurement of X-ray diffraction spectrum of the catalytic complex by CuKα-ray, it had halo having the maximum intensity at $2\theta=32.9°$.

According to a measurement of an integrated micropore porosity by a mercury porosimeter (60,000 psig.), it was 0.04 $cm^3/g$. in pore radii of 20 to 500 Å.

Preparation of Catalyst 2:

Preparation of solid titanium trichloride type catalytic complex:

(A) Preparation of reduced solid:

In a 500 mℓ. four necked flask purged with argon, 45 mℓ. of n-hexane and 100 m mol of titanium tetrachloride were charged and were cooled at 0°C and stirred, and a solution of 200 m mol of ethylaluminum sesquichloride in 70 mℓ. of n-hexane was added drowpise for 30 min. . After the addition, the mixture was stirred at 0°C for 2 hours to perform the aging. The product was washed with 100 mℓ. of n-hexane for 5 times to obtain 21 g. of a reddish purple solid.

(B) Complexing treatment:

The reddish purple solid obtained in the step (A) was admixed with 150 mℓ. of n-hexane and 21 mℓ. of diisoamyl ether and the mixture was stirred at 30 C for 1 hr. The product was washed with 100 mℓ. of n-hexane for 5 times and dried under a reduced pressure to obtain 21 g. of a brown product.

(C) Treatment with titanium tetrachloride:

The brown product obtained in the step (B) was admixed with 400 m mol of titanium tetrachloride to react them at 35°C for 1.5 hr. and the product was washed with 100 mℓ. of n-hexane for 8 times to obtain about 20 g. of a purple solid $TiC\ell_3$ type catalytic complex.

According to an elementary analysis, the product had the formula $TiC\ell_3(A\ell C\ell_3)_{0.01}[(i\text{-}C_5H_{11})_2O]_{0.11}$.

According to a measurement of X-ray diffraction spectrum by CuK $\alpha$-ray, it had halo having the maximum intensity at $2\theta=32.9°$.

According to a measurement of an integrated micropore porosity by a mercury porosimeter, it was 0.16 $cm^3/g$. in pore radii of 20 to 500 Å.

Preparation of Catalyst 3:

Preparation of solid titanium trichloride type catalytic complex:

(A) Preparation of solution of titanium trichloride:

Into a 500 mℓ. four necked flask dried and purged with argon, 150 mℓ. of pure toluene and 90 m mol of titanium tetrachloride were charged and then, 85 m mol of di-n-butyl ether was added whereby a slight exothermic reaction of titanium tetrachloride and di-n-butyl ether was performed to be dissolved into toluene and an orangish yellow solution was obtained. The solution was stirred at 25°C and a solution of 45 m mol of diethyl aluminum monochloride in 20 mℓ. of toluene was gradually added to obtain a dark orange solution of titanium trichloride.

(B) Precipitation of titanium trichloride and preparation of catalyst:

The solution of titanium trichloride obtained in the step (A) was heated to 95°C. During the heating, a purple titanium trichloride precipitate was formed. The mixture was stirred at 95°C for 30 min. and the precipitate was separated by a filtration and washed with 100 mℓ. of toluene for 1 time and then washed with 100 mℓ. of n-heptane for 5 times to obtain a fine purple titanium trichloride type catalytic complex. According to an elementary analysis, the catalytic complex had the formula $TiC\ell_3(A\ell C\ell_3)_{0.004}[(n\text{-}C_4H_9)_2O]_{0.06}$.

According to a measurement of X-ray diffraction spectrum by CuKα-ray, it had halo having the maximum intensity at 2θ=32.9°.

EXAMPLE 1:

A 2 liter induction stirring type autoclave equipped with an anchor type stirrer was used.

Into the autoclave which was dried, evacuated and purged with nitrogen and then purged with propylene gas, 2.0 m mol of di-n-propylaluminum monochloride was charged and hydrogen gas was fed under a pressure of 1.0 kg./$cm^2$ and then 700 g. of liquid propylene was charged. The autoclave was heated. When the temperature in the autoclave reached to 70°C, 5 mℓ. of a slurry of the solid titanium trichloride catalytic complex obtained by Preparation of Catalyst 1, (18 mg. as $TiCl_3$) in toluene was charged under nitrogen gas pressure. This was considered to be the initiation of the polymerization in the first stage. The polymerization was continued at 70°C for 3.0 hr.. A total pressure was 32.5 kg./$cm^2$ gauge. After 3.0 hr., the liquid propylene and hydrogen gas were purged to be zero kg./$cm^2$ (gauge) of an inner pressure of the autoclave. A siphon was equipped in nitrogen gas atmosphere, to sample several g. of the powdery propylene homopolymer under nitrogen gas pressure. A Ti content of the sample was measured by a fluorescent X-ray analysis to calculate an yield of the polymer in the first stage, and MFI of the polymer was measured.

Hydrogen gas was fed at a pressure of 0.5 kg./$cm^2$ into the autoclave and 500 g. of liquid propylene was fed. The temperature in the autoclave was controlled at 50°C and ethylene gas was fed at a pressure of 7.0 kg./$cm^2$. This time was considered to be the initiation of the polymerization in the second stage. The polymerization was continued at 50°C for 0.42 hr..

During the polymerization, ethylene gas was continuously fed to maintain an ethylene partial pressure of 7.0 kg./$cm^2$. The total pressure was 28 kg./$cm^2$(gauge). A concentration of propylene in the vapor phase was an average of 72 mol % and a concentration of hydrogen in the vapor phase was an average of 1.5 mol %.

After 0.42 hr., the liquid propylene, ethylene gas and hydrogen gas were purged to be zero kg./$cm^2$ (gauge) of the inner pressure of the autoclave. A siphon was equipped in nitrogen gas atmosphere to sample several grams of the powdery propylene-ethylene block copolymer under nitrogen gas pressure. A Ti content of the sample was measured by a fluorescent X-ray analysis, and an yield of the polymer in the second stage was calculated.

Hydrogen gas was fed at a pressure of 4.0 kg./$cm^2$ into the autoclave and the temperature in the autoclave was controlled at 70°C and ethylene gas was fed at a pressure of 10.0 kg./$cm^2$. This time was considered to be the initiation of the polymerization in the third stage. The polymerization was continued at 70°C for 1.0 hr.. During the polymerization, ethylene was continuously fed to maintain an ethylene partial pressure of 10.0 kg./$cm^2$. The total pressure was 14 kg./$cm^2$ (gauge). A concentration of hydrogen in the vapor phase was an average of 33 mol % and a concentration of propylene in the vapor phase was zero. After 1.0 hr., ethylene gas and hydrogen gas was purged to obtain 405 g. of white powdery propylene-ethylene block copolymer which had excellent free fluidity without aggregated mass. The copolymer obtained in the third stage had MFI of less than 0.01. The conditions of the polymerizations and the data of the measurements are shown in Table 1.

The powdery copolymer had a bulk density $\rho_B$ of 0.45 g./cc. and I.I. of 96.2. These values were slightly lower than the values of the propylene homopolymer sampled of the first stage as

ρB of 0.46 g./cc. and I.I. of 97.5%. The powdery copolymer had an average particle diameter of 350 μ and a repose angle of 37° and a slip angle of 36°.

On the other hand, in physical characteristics, a first yield strength and an Izod impact strength of the product were remarkably high even though non-crystalline polymers were not separated. A brittle point temperature was remarkably low. A catalytic efficiency CE was 22500. A Ti content remained in the copolymer was low enough to be 14 ppm which need not to be separated. A tensile impact strength was 821 kg. cm./$cm^2$.

EXAMPLES 2 and 3:

In accordance with the process of Example 1 except varying the conditions for the polymerizations in the first stage and the second stage as shown in Table 1. Polymerizations were carried out to obtain propylene-ethylene block copolymers. The results of the measurements are shown in Table 1.

REFERENCE 1:

In accordance with the process of Example 1 except varying the conditions for the polymerizations in the first stage and the second stages as shown in Table 1 without the polymerization at the third stage, polymerizations were carried out. The results of the polymerization and the data of the measurements are shown in Table 1. When any polymerization in the third stage was not carried out, the brittle point temperature and the impact strength are not satisfactory.

| Table 1 | Exp. 1 | Exp. 2 | Exp. 3 |
|---|---|---|---|
| **First stage** | | | |
| Temp. and time for polymerization(°C ; hr.) | 70-3.0 | 70-3.0 | 70-3.0 |
| Total pressure for polymerization(kg./$cm^2$) | 32.5 | 32.6 | 32.6 |
| $H_2$ partial pressure 70°C(kg./$cm^2$) | 2.5 | 2.6 | 2.6 |
| MFI (g./10 min) | 4.5 | 4.7 | 4.8 |
| **Second stage** | | | |
| Temp. and time for polymerization(°C ; hr.) | 50-0.42 | 50-0.42 | 50-0.6 |
| Total pressure for polymerization (kg./$cm^2$) | 28 | 24 | 30 |
| $H_2$ conc. in vapor phase(mol. %) | 1.5 | 0.5 | 2.5 |
| $C_3H_6$ conc. in vapor phase(mol %) | 72 | 85 | 55 |
| MFI (g./10 min) | $<$0.01 | $<$0.01 | $<$0.01 |
| **Third stage** | | | |
| Temp. and time for polymerization(°C ; hr.) | 70-1.0 | 70-1.0 | 70-1.0 |
| Total pressure for polymerization (kg./$cm^2$) | 14 | 14 | 14 |
| $H_2$ conc. in vapor phase(mol %) | 33 | 33 | 31 |
| $C_3H_6$ conc. in vapor phase(mol %) | 0 | 0 | 0 |
| MFI (g./10 min) | $<$0.01 | $<$0.01 | $<$0.01 |
| **Total polymer** | | | |
| Yield (g) | 405 | 398 | 402 |
| Cat. eff. CE (g/g) | 22500 | 22100 | 22300 |
| Weight ratios in 1st-2nd-3rd stages (%) | 80-9-11 | 81-9-10 | 80-10-10 |
| Isotactic index I.I. (%) | 96.2 | 96.9 | 96.5 |
| Bulk density $\rho_B$ (g./cc) | 0.45 | 0.45 | 0.45 |
| $C_2H_4$ content $[E]_{IR}$ (%) | 13.2 | 12.1 | 12.0 |
| MFI (g./10 min) | 1.8 | 1.5 | 1.5 |
| Density $\rho$ (g./cc) | 0.902 | 0.902 | 0.902 |
| 1st yield strength YS (kg./$cm^2$) | 272 | 269 | 264 |
| Izod impact strength (kg.cm/cm) | 26.5 | 28.8 | 25.3 |
| Breaking point elongation at welded part (%) | 605 | 560 | 601 |
| Brittle point temp. $T_b$ (°C) | -33 | -31 | -28 |

| Table 1 (continued) | Ref. 1 | | |
|---|---|---|---|
| First stage | | | |
| Temp. and time for polymerization(°C ; hr.) | 70-3.0 | | |
| Total pressure for polymerization($kg./cm^2$) | 32.5 | | |
| $H_2$ partial pressure 70°C($kg./cm^2$) | 2.5 | | |
| MFI (g./10 min) | 4.5 | | |
| Second stage | | | |
| Temp. and time for polymerization(°C ; hr.) | 50-0.42 | | |
| Total pressure for polymerization ($kg./cm^2$) | 28 | | |
| $H_2$ conc. in vapor phase(mol. %) | 1.4 | | |
| $C_3H_6$ conc. in vapor phase(mol %) | 73 | | |
| MFI (g./10 min) | 0.01 | | |
| Third stage | | | |
| Temp. and time for polymerization(°C ; hr.) | - | | |
| Total pressure for polymerization ($kg./cm^2$) | - | | |
| $H_2$ conc. in vapor phase(mol %) | - | | |
| $C_3H_6$ conc. in vapor phase(mol %) | - | | |
| MFI (g./10 min) | - | | |
| Total polymer | | | |
| Yield (g) | 367 | | |
| Cat. eff. CE (g/g) | 20400 | | |
| Weight ratios in 1st-2nd-3rd stages (%) | 90-10-0 | | |
| Isotactic index I.I. (%) | 94.5 | | |
| Bulk density $\rho_B$ (g./cc) | 0.43 | | |
| $C_2H_4$ content $[E]_{IR}$ (%) | 3.5 | | |
| MFI (g./10 min) | 2.3 | | |
| Density $\rho$ (g./cc) | 0.901 | | |
| 1st yield strength YS ($kg./cm^2$) | 246 | | |
| Izod impact strength (kg.cm/cm) | 13.0 | | |
| Breaking point elongation at welded part (%) | 590 | | |
| Brittle point temp. $T_b$ (°C) | -12 | | |

REFERENCES 2 and 3:

In accordance with the process of Example 1 except varying the conditions for the polymerizations in the first stage and the second stage as shown in Table 2, polymerizations were carried out to obtain propylene-ethylene block copolymers. The results of the measurements are shown in Table 2. When the concentration of propylene in the vapor phase in the second stage was 95 mol % or 45 mol %, an improvement of Izod impact strength was not satisfactory.

REFERENCE 4:

In accordance with the process of Example 1 except that using 150 mg. of a commercial titanium trichloride $TiCl_3 \cdot 1/3\ AlCl_3$ instead of the solid titanium trichloride catalytic complex obtained in Preparation of Catalyst 1, and 5.0 m mol of di-n-propylaluminum monochloride instead of 2.0 m mol, and varying the condition for the polymerization in the first stage and the second stage as shown in Table 2, polymerizations were carried out. The results of the measurement are shown in Table 2.

The resulting powdery copolymer had poor free fluidity with many aggregated masses. An average particle diameter could not be measured because of tackiness. The powdery copolymer had a repose angle of 72° and a slip angle of 69°. An addhesion of rubber-like product on the inner wall of the autoclave was found. In the physical characteristics, the first yield strength was low and accordingly, the non-crystalline copolymer should be separated to obtain a copolymer having high rigidity.

| Table 2 | Ref. 2 | Ref. 3 | Ref. 4 |
|---|---|---|---|
| First stage | | | |
| Temp. and time for polymerization(°C ; hr.) | 70-3.0 | 70-3.0 | 70-3.0 |
| Total pressure for polymerization(kg./$cm^2$) | 32.7 | 32.5 | 32.5 |
| $H_2$ partial pressure 70°C(kg./$cm^2$) | 2.7 | 2.5 | 2.5 |
| MFI (g./10 min) | 5.1 | 4.5 | 4.5 |
| Second stage | | | |
| Temp. and time for polymerization(°C ; hr.) | 50-0.42 | 40-0.6 | 50-0.42 |
| Total pressure for polymerization (kg./$cm^2$) | 21 | 37 | 28 |
| $H_2$ conc. in vapor phase(mol. %) | 0.4 | 5.0 | 1.5 |
| $C_3H_6$ conc. in vapor phase(mol %) | 95 | 45 | 73 |
| MFI (g./10 min) | $<$0.01 | $<$0.01 | $<$0.01 |
| Third stage | | | |
| Temp. and time for polymerization(°C ; hr.) | 70-1.0 | 70-1.0 | 70-1.0 |
| Total pressure for polymerization (kg./$cm^2$) | 14 | 14 | 14 |
| $H_2$ conc. in vapor phase(mol %) | 32 | 30 | 33 |
| $C_3H_6$ conc. in vapor phase(mol %) | 0 | 0 | 0 |
| MFI (g./10 min) | $<$0.01 | $<$0.01 | $<$0.01 |
| Total polymer | | | |
| Yield (g) | 389 | 414 | 325 |
| Cat. eff. CE (g/g) | 21600 | 23000 | 2170 |
| Weight ratios in 1st-2nd-3rd stages (%) | 82-8-10 | 80-10-10 | 80-10-10 |
| Isotactic index I.I. (%) | 97.9 | 97.6 | 85.0 |
| Bulk density $\rho_B$ (g./cc) | 0.46 | 0.46 | 0.27 |
| $C_2H_4$ content $[E]_{IR}$ (%) | 12.3 | 13.5 | 11.2 |
| MFI (g./10 min) | 1.7 | 1.5 | 1.7 |
| Density $\rho$ (g./cc) | 0.906 | 0.905 | 0.894 |
| 1st yield strength YS (kg./$cm^2$) | 261 | 250 | 203 |
| Izod impact strength (kg.cm/cm) | 9.5 | 10.0 | 14.3 |
| Breaking point elongation at welded part (%) | 510 | 595 | 588 |
| Brittle point temp. $T_b$ (°C) | -25 | -24 | -26 |

EXAMPLES 4 and 5 and REFERENCES 5 and 6:

In accordance with the process of Example 1 except varying the conditions for the polymerizations in the first stage and the second stage as shown in Table 3, polymerizations were carried out. The results of the measurements are shown in Table 3.

When a concentration of hydrogen in the vapor phase in the second stage was zero (Reference 5), the surface condition of a melt extruded product was inferior to be shark skin surface and a melt flow was inferior.

When the concentration of hydrogen in the vapor phase was 30 mol% and MFI of the polymer obtained in the second stage was 1.0 (Reference 6), the Izod impact strength was inferior.

| Table 3 | Exp. 4 | Exp. 5 | Ref. 5 |
|---|---|---|---|
| First stage | | | |
| Temp. and time for polymerization(°C ; hr.) | 70-3.0 | 70-3.0 | 70-3.0 |
| Total pressure for polymerization(kg./$cm^2$) | 32.6 | 32.6 | 33.2 |
| $H_2$ partial pressure 70°C(kg./$cm^2$) | 2.6 | 2.6 | 3.2 |
| MFI (g./10 min) | 4.9 | 4.8 | 8.0 |
| Second stage | | | |
| Temp. and time for polymerization(°C ; hr.) | 50-0.42 | 50-0.42 | 50-0.42 |
| Total pressure for polymerization (kg./$cm^2$) | 27 | 30.0 | 27 |
| $H_2$ conc. in vapor phase(mol. %) | 0.5 | 7.5 | 0 |
| $C_3H_6$ conc. in vapor phase(mol %) | 72 | 72 | 72 |
| MFI (g./10 min) | $<$ 0.01 | 0.03 | $<$ 0.01 |
| Third stage | | | |
| Temp. and time for polymerization(°C ; hr.) | 70-1.0 | 70-1.0 | 70-1.0 |
| Total pressure for polymerization (kg./$cm^2$) | 14 | 14 | 14 |
| $H_2$ conc. in vapor phase(mol %) | 30 | 34 | 34 |
| $C_3H_6$ conc. in vapor phase(mol %) | 0 | 0 | 0 |
| MFI (g./10 min) | $<$ 0.01 | $<$ 0.01 | $<$ 0.01 |
| Total polymer | | | |
| Yield (g) | 400 | 406 | 405 |
| Cat. eff. CE (g/g) | 22200 | 22600 | 22500 |
| Weight ratios in 1st-2nd-3rd stages (%) | 80-10-10 | 80-10-10 | 80-10-10 |
| Isotactic index I. I. (%) | 96.0 | 96.2 | 96.7 |
| Bulk density $\rho_B$ (g./cc) | 0.45 | 0.45 | 0.45 |
| $C_2H_4$ content $[E]_{IR}$ (%) | 11.4 | 11.2 | 11.5 |
| MFI (g./10 min) | 0.8 | 2.0 | 0.9 |
| Density $\rho$ (g./cc) | 0.902 | 0.902 | 0.902 |
| 1st yield strength YS (kg./$cm^2$) | 266 | 278 | 265 |
| Izod impact strength (kg.cm/cm) | 38 | 25.1 | $>$45 |
| Breaking point elongation at welded part (%) | 602 | 610 | 600 |
| Brittle point temp. $T_b$ (°C) | -27 | -25 | -24 |

| Table 3 (continued) | Ref. 6 | | |
|---|---|---|---|
| First stage | | | |
| Temp. and time for polymerization(°C ; hr.) | 70-3.0 | | |
| Total pressure for polymerization(kg./$cm^2$) | 32.1 | | |
| $H_2$ partial pressure 70°C(kg./$cm^2$) | 2.1 | | |
| MFI (g./10 min) | 2.3 | | |
| Second stage | | | |
| Temp. and time for polymerization(°C ; hr.) | 50-0.42 | | |
| Total pressure for polymerization (kg./$cm^2$) | 36.0 | | |
| $H_2$ conc. in vapor phase(mol. %) | 30.0 | | |
| $C_3H_6$ conc. in vapor phase(mol %) | 72 | | |
| MFI (g./10 min) | 1.0 | | |
| Third stage | | | |
| Temp. and time for polymerization(°C ; hr.) | 70-1.0 | | |
| Total pressure for polymerization (kg./$cm^2$) | 14 | | |
| $H_2$ conc. in vapor phase(mol %) | 32 | | |
| $C_3H_6$ conc. in vapor phase(mol %) | 0 | | |
| MFI (g./10 min) | $<$0.01 | | |
| Total polymer | | | |
| Yield (g) | 407 | | |
| Cat. eff. CE (g/g) | 22600 | | |
| Weight ratios in 1st-2nd-3rd stages (%) | 80-10-10 | | |
| Isotactic index I.I.(%) | 94.7 | | |
| Bulk density $\rho_B$ (g./cc) | 0.45 | | |
| $C_2H_4$ content $[E]_{IR}$ (%) | 11.5 | | |
| MFI (g./10 min) | 1.7 | | |
| Density $\rho$ (g./cc) | 0.902 | | |
| 1st yield strength YS (kg./$cm^2$) | 266 | | |
| Izod impact strength (kg.cm/cm) | 5 | | |
| Breaking point elongation at welded part (%) | 598 | | |
| Brittle point temp. $T_b$ (°C) | -16 | | |

EXAMPLES 6, 7 and 8 and REFERENCE 7:

In accordance with the process of Example 1 except using the titanium trichloride type catalyst obtained in Preparation of Catalyst 3 and varying the condition for polymerizations in the first to three stages as shown in Table 4, polymerizations were carried out. The results of the measurements are shown in Table 4.

As it is clear from the result of Reference 7, when a concentration of propylene in the vapor phase was 80 mol %, the first yield strength was remarkably low, then it is necessary to separate the non-crystalline polymers in order to obtain the copolymer having remarkably low first yield strength and high rigidity.

| Table 4 | Exp. 6 | Exp. 7 |
|---|---|---|
| First stage | | |
| Temp. and time for polymerization(°C ; hr.) | 70-3.0 | 70-3.0 |
| Total pressure for polymerization(kg./$cm^2$) | 32.5 | 32.5 |
| $H_2$ partial pressure 70°C(kg./$cm^2$) | 2.5 | 2.5 |
| MFI (g. /10 min) | 4.5 | 4.6 |
| Second stage | | |
| Temp. and time for polymerization(°C ; hr.) | 50-0.42 | 50-0.42 |
| Total pressure for polymerization (kg. /$cm^2$) | 28 | 28 |
| $H_2$ conc. in vapor phase(mol. %) | 1.5 | 1.4 |
| $C_3H_6$ conc. in vapor phase(mol %) | 72 | 73 |
| MFI (g. /10 min) | $<$0.01 | $<$0.01 |
| Third stage | | |
| Temp. and time for polymerization(°C ; hr.) | 70-1 | 70-1 |
| Total pressure for polymerization (kg. /$cm^2$) | 16.5 | 20.7 |
| $H_2$ conc. in vapor phase(mol %) | 35 | 41 |
| $C_3H_6$ conc. in vapor phase(mol %) | 20 | 40 |
| MFI (g. /10 min) | $<$0.01 | $<$0.01 |
| Total polymer | | |
| Yield (g) | 398 | 402 |
| Cat. eff. CE (g/g) | 22100 | 22300 |
| Weight ratios in 1st-2nd-3rd stages (%) | 80-9-11 | 80-10-10 |
| Isotactic index I. I. (%) | 96.0 | 95.5 |
| Bulk density $\rho_B$ (g. /cc) | 0.45 | 0.42 |
| $C_2H_4$ content $[E]_{IR}$ (%) | 11.3 | 10.8 |
| MFI (g. /10 min) | 1.4 | 1.4 |
| Density $\rho$ (g. /cc) | 0.44 | 0.43 |
| 1st yield strength YS (kg. /$cm^2$) | 268 | 251 |
| Izod impact strength (kg.cm/cm) | 28.0 | 29.6 |
| Breaking point elongation at welded part (%) | 610 | 590 |
| Brittle point temp. $T_b$ (°C) | -27 | -28 |

| Table 4' | Exp. 8 | Ref. 7 |
|---|---|---|
| First stage | | |
| Temp. and time for polymerization(°C ; hr.) | 70-3.0 | 70-3.0 |
| Total pressure for polymerization(kg./cm$^2$) | 32.5 | 32.5 |
| $H_2$ partial pressure 70°C(kg./cm$^2$) | 2.5 | 2.5 |
| MFI (g./10 min) | 4.6 | 4.3 |
| Second stage | | |
| Temp. and time for polymerization(°C ; hr.) | 50-0.42 | 50-0.42 |
| Total pressure for polymerization (kg./cm$^2$) | 28 | 28 |
| $H_2$ conc. in vapor phase(mol. %) | 1.4 | 1.8 |
| $C_3H_6$ conc. in vapor phase(mol %) | 71 | 71 |
| MFI (g./10 min) | $<$ 0.01 | $<$ 0.01 |
| Third stage | | |
| Temp. and time for polymerization(°C ; hr.) | 70-1 | 70-1 |
| Total pressure for polymerization (kg./cm$^2$) | 25.0 | 29.0 |
| $H_2$ conc. in vapor phase(mol %) | 100 | 34 |
| $C_3H_6$ conc. in vapor phase(mol %) | 5 | 80 |
| MFI (g./10 min) | 0.02 | 0.01 |
| Total polymer | | |
| Yield (g) | 404 | 405 |
| Cat. eff. CE (g/g) | 22400 | 22500 |
| Weight ratios in 1st-2nd-3rd stages (%) | 80-9-11 | 80-10-10 |
| Isotactic index I.I. (%) | 96.4 | 94.2 |
| Bulk density $\rho_B$ (g./cc) | 0.45 | 0.38 |
| $C_2H_4$ content $[E]_{IR}$ (%) | 11.5 | 9.6 |
| MFI (g./10 min) | 1.5 | 1.4 |
| Density $\rho$ (g./cc) | 0.45 | 0.37 |
| 1st yield strength YS (kg./cm$^2$) | 275 | 208 |
| Izod impact strength (kg.cm/cm) | 26.3 | 35 |
| Breaking point elongation at welded part (%) | 603 | 595 |
| Brittle point temp. $T_b$ (°C) | -27 | -22 |

EXAMPLES 9 and 10:

In accordance with the process of Example 1 except using the titanium trichloride catalyst obtained in Preparation of Catalyst 2 and varying the conditions for polymerizations as shown in Table 5, polymerizations were carried out. The results of the measurements are shown in Table 5.

The powdery copolymer obtained in Example 9 had an average particle size of 330 $\mu$ and a repose angle of 40° and a slip angle of 38°.

REFERENCE 8:

In accordance with the process of Example 1 except using 310 mg. a commercial titanium trichloride complex of $TiC\ell_3 \cdot 1/3\ A\ell C\ell_3$ instead of the titanium trichloride catalyst of Preparation of Catalyst 1 and using 10 m mol of diethylaluminum monochloride instead of di-n-propylaluminum monochloride; and using 750 m$\ell$. of n-heptane instead of liquid propylene and varying the condition for polymerizations as shown in Table 5, polymerizations were carried out. After the first stage and the second stage, each polymer was sampled as each slurry under a pressure of nitrogen.

After all of the polymerizations, the solvent and the volatile component were evaporated under a reduced pressure. The resulting polymer was a powdery copolymer having high tackiness and low free fluidity, and accordingly, an average particle size and a bulk density could not be measured. The results of the measurements of various physical characteristics are shown in Table 5. As the results of Reference 4, it is necessary to separate the non-crystalline polymers in order to obtain a copolymer having a satisfactory physical characteristics.

| Table 5 | Exp. 9 | Exp. 10 | Ref. 8 |
|---|---|---|---|
| First stage | | | |
| Temp. and time for polymerization(°C ; hr.) | 70-3 | 70-3 | 70-3.0 |
| Total pressure for polymerization(kg./$cm^2$) | 32.5 | 32.5 | 14.8 |
| $H_2$ partial pressure 70°C(kg./$cm^2$) | 2.5 | 2.5 | 2.2 |
| MFI (g./10 min) | 5.1 | 4.6 | 6.0 |
| Second stage | | | |
| Temp. and time for polymerization(°C ; hr.) | 50-0.42 | 50-0.42 | 60-0.5 |
| Total pressure for polymerization (kg./$cm^2$) | 28 | 28 | 2.1 |
| $H_2$ conc. in vapor phase(mol. %) | 1.6 | 1.4 | 0 |
| $C_3H_6$ conc. in vapor phase(mol %) | 72 | 73 | 55 |
| MFI (g./10 min) | $<0.01$ | $<0.01$ | $<0.01$ |
| Third stage | | | |
| Temp. and time for polymerization(°C ; hr.) | 70-1.0 | 70-1.0 | 60-1.2 |
| Total pressure for polymerization (kg./$cm^2$) | 14 | 20.8 | 1.5 |
| $H_2$ conc. in vapor phase(mol %) | 33 | 40 | 28 |
| $C_3H_6$ conc. in vapor phase(mol %) | 0 | 40 | 7 |
| MFI (g./10 min) | $<0.01$ | $<0.01$ | 0.06 |
| Total polymer | | | |
| Yield (g) | 340 | 335 | 345 |
| Cat. eff. CE (g/g) | 18900 | 18600 | 1110 |
| Weight ratios in 1st-2nd-3rd stages (%) | 80-10-10 | 80-10-10 | 78-8-14 |
| Isotactic index I.I. (%) | 91.0 | 90.5 | 78.1 |
| Bulk density $\rho_B$ (g./cc) | 0.40 | 0.40 | - |
| $C_2H_4$ content $[E]_{IR}$ (%) | 11.0 | 10.2 | 15.1 |
| MFI (g./10 min) | 1.6 | 1.5 | 1.8 |
| Density $\rho$ (g./cc) | 0.902 | 0.900 | 0.890 |
| 1st yield strength YS (kg./$cm^2$) | 260 | 253 | 202 |
| Izod impact strength (kg.cm/cm) | 26.6 | 25.0 | 12.2 |
| Breaking point elongation at welded part (%) | 630 | 590 | 591 |
| Brittle point temp. $T_b$ (°C) | -27 | -24 | -29 |

EXAMPLE 11:

In accordance with the process of Example 1 except varying the conditions for polymerizations as shown in Table 6, polymerizations in the first stage and the second stage were carried out. Then, the polymerization in the third stage was carried out as follows.

After the second stage, the liquid propylene, ethylene gas and hydrogen gas were purged to be a pressure of zero kg./$cm^2$ (gauge) and then, hydrogen gas was fed at a pressure of 1.5 kg./$cm^2$ and 500 g. of the liquid propylene was fed and the temperature in an autoclave was controlled to be 30° C and ethylene gas was fed at a partial pressure of 12.5 kg./$cm^2$. This time was considered to be the initiation of the polymerization in the third stage. The polymerization was continued at 30°C for 0.83 hr. with stirring. During the polymerization, ethylene gas was continuously fed to maintain an ethylene partial pressure of 12.5 kg./$cm^2$. The total pressure was 27.5 kg./$cm^2$ (gauge). A concentration of propylene in the vapor phase was an average of 46 mol% and a concentration of hydrogen was an average of 6 mol%. After 0.83 hr., the liquid propylene-ethylene gas and hydrogen gas were purged, and 390 g. of white powdery propylene-ethylene block copolymer having excellent free fluidity without any aggregated mass was obtained from the autoclave. The conditions for polymerizations and the results of various measurements are shown in Table 6. The powdery copolymer had a bulk density $\rho B$ of 0.43 g./cc and I.I. of 94.7%. These values were slightly lower than the values of the propylene homopolymer sampled after the first stage as $\rho B$ of 0.46 g./cc and I.I. of 96.6%. The powdery copolymer had an average particle diameter of 360 $\mu$ and a repose angle of 37° and a slip angle of 36°.

On the other hand, in physical characteristics, a first yield strength and an Izod impact strength of the product were

remarkably high even though non-crystalline polymers were not separated. A brittle temperature was remarkably low. A tensile impact strength was 816 kg.cm/$cm^2$. A catalytic efficiency CE was 21,700. A Ti content remained in the copolymer was low enough to be 14 ppm which need not be separated.

EXAMPLES 12 to 14:

In accordance with the process of Example 11 except varying the conditions for polymerizations in the second stage and the third stage as shown in Table 6, polymerizations were carried out to obtain a propylene-ethylene block copolymer. The results of various measurements are shown in Table 6.

In Example 14, the titanium trichloride catalyst shown in Preparation of Catalyst 3 was used.

| Table 6 | Exp. 11 | Exp. 12 |
|---|---|---|
| First stage | | |
| Temp. and time for polymerization(°C ; hr.) | 70-3.0 | 70-3.0 |
| Total pressure for polymerization(kg./$cm^2$) | 33.3 | 33.0 |
| $H_2$ partial pressure 70°C(kg./$cm^2$) | 3.3 | 3.0 |
| MFI (g./10 min) | 8.8 | 6.1 |
| Second stage | | |
| Temp. and time for polymerization(°C ; hr.) | 55-0.2 | 55-0.3 |
| Total pressure for polymerization (kg./$cm^2$) | 30 | 31 |
| $H_2$ conc. in vapor phase(mol. %) | 0.3 | 0.8 |
| $C_3H_6$ conc. in vapor phase(mol %) | 74 | 72 |
| MFI (g./10 min) | $<$0.01 | $<$0.01 |
| Third stage | | |
| Temp. and time for polymerization(°C ; hr.) | 30-0.83 | 30-0.83 |
| Total pressure for polymerization (kg./$cm^2$) | 27.5 | 31.0 |
| $H_2$ conc. in vapor phase(mol %) | 6 | 6 |
| $C_3H_6$ conc. in vapor phase(mol %) | 46 | 40 |
| MFI (g./10 min) | $<$0.01 | $<$0.01 |
| Total polymer | | |
| Yield (g) | 390 | 397 |
| Cat. eff. CE (g/g) | 21700 | 22100 |
| Weight ratios in 1st-2nd-3rd stages (%) | 82-6-12 | 82-8-10 |
| Isotactic index I.I.(%) | 94.7 | 95.1 |
| Bulk density $\rho_B$ (g./cc) | 0.43 | 0.43 |
| $C_2H_4$ content $[E]_{IR}$ (%) | 8.2 | 7.8 |
| MFI (g./10 min) | 1.8 | 1.5 |
| Density $\rho$ (g./cc) | 0.900 | 0.898 |
| 1st yield strength YS (kg./$cm^2$) | 264 | 256 |
| Izod impact strength (kg.cm/cm) | 24.5 | 24.1 |
| Breaking point elongation at welded part (%) | 580 | 608 |
| Brittle point temp. $T_b$ (°C) | -24 | -23 |

| Table 6' | Exp. 13 | Exp. 14 |
| --- | --- | --- |
| **First stage** | | |
| Temp. and time for polymerization(°C ; hr.) | 70-3.0 | 70-3.0 |
| Total pressure for polymerization($kg./cm^2$) | 33.5 | 33.6 |
| $H_2$ partial pressure 70°C($kg./cm^2$) | 3.5 | 3.6 |
| MFI (g. /10 min) | 10.3 | 11.1 |
| **Second stage** | | |
| Temp. and time for polymerization(°C ; hr.) | 55-0.4 | 55-0.2 |
| Total pressure for polymerization ($kg. /cm^2$) | 27 | 34 |
| $H_2$ conc. in vapor phase(mol. %) | 0.3 | 0.3 |
| $C_3H_6$ conc. in vapor phase(mol %) | 83 | 65 |
| MFI (g. /10 min) | $<$ 0.01 | $<$ 0.01 |
| **Third stage** | | |
| Temp. and time for polymerization(°C ; hr.) | 30-1.0 | 40-0.67 |
| Total pressure for polymerization ($kg. /cm^2$) | 35.5 | 33.9 |
| $H_2$ conc. in vapor phase(mol %) | 3 | 3 |
| $C_3H_6$ conc. in vapor phase(mol %) | 33 | 45 |
| MFI (g. /10 min) | $<$ 0.01 | $<$ 0.01 |
| **Total polymer** | | |
| Yield (g) | 378 | 409 |
| Cat. eff. CE (g/g) | 21000 | 22700 |
| Weight ratios in 1st-2nd-3rd stages (%) | 80-10-10 | 82-5-13 |
| Isotactic index I. I. (%) | 93.8 | 93.4 |
| Bulk density $\rho_B$ (g. /cc) | 0.42 | 0.42 |
| $C_2H_4$ content $[E]_{IR}$ (%) | 8.5 | 12.1 |
| MFI (g. /10 min) | 1.1 | 2.5 |
| Density $\rho$(g. /cc) | 0.899 | 0.894 |
| 1st yield strength YS ($kg. /cm^2$) | 250 | 275 |
| Izod impact strength (kg.cm/cm) | 25.1 | 24.3 |
| Breaking point elongation at welded part (%) | 570 | 621 |
| Brittle point temp. $T_b$ (°C) | -25 | -35 |

## REFERENCE 9:

In accordance with the process of Example 11 except that the polymerization in the third stage was eliminated, polymerizations were carried out. The results of the polymerizations and the measurements are shown in Table 7. When the polymerization in the third stage was eliminated a brittle point temperature was high and and an impact strength was not enough satisfactory.

## REFERENCES 10 to 12:

In accordance with the process of Example 11 except varying the conditions for polymerizations as shown in Table 4, polymerizations were carried out to obtain propylene-ethylene block copolymers. The results of various measurements are shown in Table 7.

When the concentration of propylene in the vapor phase in the second stage was 95 mol % or 45 mol %, an improvement of Izod impact strength was not satisfactory.

When the concentration of hydrogen gas was zero, the surface condition of an melt extruded product was inferior to be shark skin surface.

## REFERENCE 13:

In accordance with the process of Example 11 except using 150 mg. of a commercial titanium trichloride complex $TiCl_3 \cdot 1/3 AlCl_3$ instead of the solid titanium trichloride catalytic complex obtained in Preparation of Catalyst 1 and using 5.0 m mol of di-n-propylaluminum monochloride instead of 5.0 m mol, polymerizations were carried out.

The results of various measurements are shown in Table 7. The powdery copolymer had poor free fluidity with many aggregated masses. An average particle diameter could not be measured because of tackiness. The powdery copolymer had a repose angle of 72° and a slip angle of 71° and had remarkably low first yield strength. It is necessary to separate the non-crystalline polymers in order to obtain a copolymer having high rigidity.

| Table 7 | Ref. 9 | Ref. 10 | Ref. 11 |
|---|---|---|---|
| First stage | | | |
| Temp. and time for polymerization(°C ; hr.) | 70-3.0 | 70-3.0 | 70-3.0 |
| Total pressure for polymerization(kg./$cm^2$) | 33.3 | 33.1 | 33.4 |
| $H_2$ partial pressure 70°C(kg./$cm^2$) | 3.3 | 3.1 | 3.4 |
| MFI (g./10 min) | 8.5 | 7.6 | 8.9 |
| Second stage | | | |
| Temp. and time for polymerization(°C ; hr.) | 55-0.2 | 55-0.2 | 30-0.5 |
| Total pressure for polymerization (kg./$cm^2$) | 30 | 24 | 28 |
| $H_2$ conc. in vapor phase(mol. %) | 0.3 | 0.4 | 0.9 |
| $C_3H_6$ conc. in vapor phase(mol %) | 75 | 95 | 45 |
| MFI (g./10 min) | $<$0.01 | 0.01 | $<$0.01 |
| Third stage | | | |
| Temp. and time for polymerization(°C ; hr.) | - | 30-0.83 | 30-0.83 |
| Total pressure for polymerization (kg./$cm^2$) | - | 28 | 28 |
| $H_2$ conc. in vapor phase(mol %) | - | 6 | 6 |
| $C_3H_6$ conc. in vapor phase(mol %) | - | 46 | 45 |
| MFI (g./10 min) | - | $<$0.01 | $<$0.01 |
| Total polymer | | | |
| Yield (g) | 351 | 407 | 391 |
| Cat. eff. CE (g/g) | 19500 | 22600 | 21700 |
| Weight ratios in 1st-2nd-3rd stages (%) | 91-9-0 | 80-7-13 | 82-8-10 |
| Isotactic index I.I. (%) | 94.2 | 96.3 | 96.8 |
| Bulk density $\rho_B$ (g./cc) | 0.42 | 0.45 | 0.45 |
| $C_2H_4$ content $[E]_{IR}$ (%) | 3.2 | 6.9 | 8.2 |
| MFI (g./10 min) | 2.4 | 2.3 | 2.1 |
| Density $\rho$ (g./cc) | 0.902 | 0.903 | 0.901 |
| 1st yield strength YS (kg./$cm^2$) | 242 | 275 | 251 |
| Izod impact strength (kg.cm/cm) | 13.5 | 8.3 | 10.2 |
| Breaking point elongation at welded part (%) | 610 | 520 | 609 |
| Brittle point temp. $T_b$ (°C) | -9 | -22 | -23 |

47 50

| Table 7' | Ref. 12 | Ref. 13 |
|---|---|---|
| First stage | | |
| Temp. and time for polymerization(°C ; hr.) | 70-3.0 | 70-3.0 |
| Total pressure for polymerization(kg./$cm^2$) | 33.3 | 33.2 |
| $H_2$ partial pressure 70°C(kg./$cm^2$) | 3.3 | 3.2 |
| MFI (g./10 min) | 8.5 | 8.2 |
| Second stage | | |
| Temp. and time for polymerization(°C ; hr.) | 55-0.2 | 55-0.2 |
| Total pressure for polymerization (kg./$cm^2$) | 28 | 30 |
| $H_2$ conc. in vapor phase(mol. %) | 0 | 0.3 |
| $C_3H_6$ conc. in vapor phase(mol %) | 80 | 74 |
| MFI (g./10 min) | <0.01 | <0.01 |
| Third stage | | |
| Temp. and time for polymerization(°C ; hr.) | 30-0.83 | 30-0.83 |
| Total pressure for polymerization (kg./$cm^2$) | 28 | 28 |
| $H_2$ conc. in vapor phase(mol %) | 6 | 6 |
| $C_3H_6$ conc. in vapor phase(mol %) | 45 | 45 |
| MFI (g./10 min) | <0.01 | <0.01 |
| Total polymer | | |
| Yield (g) | 398 | 338 |
| Cat. eff. CE (g/g) | 22100 | 2250 |
| Weight ratios in 1st-2nd-3rd stages (%) | 80-9-11 | 80-10-10 |
| Isotactic index I.I. (%) | 94.1 | 85.6 |
| Bulk density $\rho_B$ (g./cc) | 0.42 | 0.28 |
| $C_2H_4$ content $[E]_{IR}$ (%) | 8.4 | 8.9 |
| MFI (g./10 min) | 1.5 | 1.5 |
| Density $\rho$ (g./cc) | 0.899 | 0.897 |
| 1st yield strength YS (kg./$cm^2$) | 245 | 207 |
| Izod impact strength (kg.cm/cm) | 17.7 | 13.2 |
| Breaking point elongation at welded part (%) | 593 | 625 |
| Brittle point temp. $T_b$ (°C) | -27 | -25 |

EXAMPLES 15 to 18:

In accordance with the process of Example 11 except using 5 mℓ. of a hexane slurry of the complex obtained in Preparation of Catalyst 2 (20 mg. as $TiC\ell_3$), as the solid titanium trichloride catalytic complex and varying the conditions for polymerizations as shown in Table 8, polymerizations were carried out. The results of various measurements are shown in Table 8. The powdery polymer obtained in Example 15 had an average particle diameter of 350 μ, a repose angle of 40° and a slip angle of 39°.

REFERENCE 14:

In accordance with the process of Example 11 except using 310 mg. of a commercial titanium trichloride complex $TiC\ell_3 \cdot 1/3\ A\ell C\ell_3$ instead of the solid titanium trichloride catalytic complex obtained in Preparation of Catalyst 1, and using 10 m mol of diethylaluminum monochloride instead of di-n-propylaluminum chloride and using 750 mℓ. of n-heptane instead of liquid propylene and varying the conditions for polymerizations as shown in Table 8, polymerizations were carried out in the same apparatus. After the polymerizations in the first stage and the second stage, polymers were sampled as a slurry under a pressure of nitrogen.

After all of the polymerizations, the solvent and the volatile component were evaporated under a reduced pressure. The resulting polymer was a powdery copolymer having high tackiness and low free fluidity and accordingly an average particle size and a bulk density could not be measured. The results of the measurements of various physical characteristics are shown in Table 8. As the results of Reference 13, it is necessary to separate the non-crystalline

polymers in order to obtain a copolymer having a satisfactory physical characteristics.

| Table 8 | Exp. 15 | Exp. 16 | Exp. 17 |
|---|---|---|---|
| First stage | | | |
| Temp. and time for polymerization(°C ; hr.) | 70-3.0 | 70-3.0 | 70-3.0 |
| Total pressure for polymerization(kg./$cm^2$) | 33.0 | 32.6 | 33.5 |
| $H_2$ partial pressure 70°C(kg./$cm^2$) | 3.0 | 2.6 | 3.5 |
| MFI (g./10 min) | 6.2 | 4.7 | 10.3 |
| Second stage | | | |
| Temp. and time for polymerization(°C ; hr.) | 55-0.2 | 50-0.3 | 55-0.2 |
| Total pressure for polymerization (kg./$cm^2$) | 30 | 33 | 29 |
| $H_2$ conc. in vapor phase(mol. %) | 0.3 | 0.4 | 0.2 |
| $C_3H_6$ conc. in vapor phase(mol %) | 75 | 60 | 80 |
| MFI (g./10 min) | < 0.01 | <0.01 | <0.01 |
| Third stage | | | |
| Temp. and time for polymerization(°C ; hr.) | 40-0.4 | 40-0.5 | 30-0.6 |
| Total pressure for polymerization (kg./$cm^2$) | 33 | 34 | 27 |
| $H_2$ conc. in vapor phase(mol %) | 3 | 5 | 3 |
| $C_3H_6$ conc. in vapor phase(mol %) | 48 | 45 | 46 |
| MFI (g./10 min) | < 0.01 | < 0.01 | <0.01 |
| Total polymer | | | |
| Yield (g) | 352 | 356 | 364 |
| Cat. eff. CE (g/g) | 17600 | 17800 | 18200 |
| Weight ratios in 1st-2nd-3rd stages (%) | 87-5-8 | 85-5-10 | 84-6-10 |
| Isotactic index I.I.(%) | 90.6 | 91.2 | 91.6 |
| Bulk density $\rho_B$ (g./cc) | 0.40 | 0.40 | 0.40 |
| $C_2H_4$ content $[E]_{IR}$ (%) | 6.5 | 8.7 | 8.5 |
| MFI (g./10 min) | 2.5 | 1.5 | 1.9 |
| Density $\rho$(g./cc) | 0.900 | 0.901 | 0.895 |
| 1st yield strength YS (kg./$cm^2$) | 268 | 256 | 260 |
| Izod impact strength (kg.cm/cm) | 23.1 | 24.5 | 23.8 |
| Breaking point elongation at welded part (%) | 572 | 610 | 601 |
| Brittle point temp. $T_b$ (°C) | -22 | -25 | -24 |

| Table 8' | Exp. 18 | Ref. 14 |
|---|---|---|
| First stage | | |
| Temp. and time for polymerization(°C ; hr.) | 70-3.0 | 70-3.0 |
| Total pressure for polymerization($kg./cm^2$) | 33.3 | 14.8 |
| $H_2$ partial pressure 70°C($kg./cm^2$) | 3.3 | 2.2 |
| MFI (g. /10 min) | 8.7 | 6.0 |
| Second stage | | |
| Temp. and time for polymerization(°C ; hr.) | 55-0.1 | 60-0.5 |
| Total pressure for polymerization ($kg./cm^2$) | 30 | 2.1 |
| $H_2$ conc. in vapor phase(mol. %) | 2 | 0 |
| $C_3H_6$ conc. in vapor phase(mol %) | 77 | 55 |
| MFI (g. /10 min) | 0.08 | $<$ 0.01 |
| Third stage | | |
| Temp. and time for polymerization(°C ; hr.) | 30-0.67 | 60-1.2 |
| Total pressure for polymerization ($kg./cm^2$) | 30 | 1.5 |
| $H_2$ conc. in vapor phase(mol %) | 3 | 28 |
| $C_3H_6$ conc. in vapor phase(mol %) | 41 | 7 |
| MFI (g. /10 min) | $<$ 0.01 | 0.06 |
| Total polymer | | |
| Yield (g) | 336 | 345 |
| Cat. eff. CE (g/g) | 16800 | 1110 |
| Weight ratios in 1st-2nd-3rd stages (%) | 87-4-9 | 78-8-14 |
| Isotactic index I. I. (%) | 90.5 | 78.1 |
| Bulk density $\rho_B$ (g. /cc) | 0.40 | - |
| $C_2H_4$ content $[E]_{IR}$ (%) | 6.9 | 15.1 |
| MFI (g. /10 min) | 1.3 | 1.8 |
| Density $\rho$(g. /cc) | 0.899 | 0.890 |
| 1st yield strength YS ($kg./cm^2$) | 246 | 202 |
| Izod impact strength (kg.cm/cm) | 27.8 | 12.2 |
| Breaking point elongation at welded part (%) | 580 | 591 |
| Brittle point temp. $T_b$ (°C) | -22 | -29 |

CLAIMS

1) A process for producing a propylene-ethylene block copolymer in the presence of a catalytic system essentially comprising an organoaluminium compound and a titanium trichloride, the polymerization being carried out in three stages with propylene being polymerized in the first stage and the resulting polypropylene being copolymerized with ethylene and propylene in two subsequent stages, characterised in that the catalyst system comprises the said organoaluminum compound and solid titanium trichloride in a catalytic complex having an atomic ratio of Al to Ti of less than 0.15:1 and including a complexing agent and the three stages of polymerization are as follows:

(a) a first stage in which propylene is polymerized in the presence of liquid propylene and hydrogen to produce a propylene homopolymer having a melt flow index of 1 to 60 at a ration of 70 to 90% by weight based on the total polymers;

(b) a second stage in which the polypropylene from the first stage is polymerized with propylene and ethylene in the presence of hydrogen and liquid propylene at a concentration of propylene in the

vapor phase, based on the total of propylene and ethylene in the vapor phase, of 50 to 85 mol % to produce a propylene-ethylene copolymer having a melt flow index of less than 0.1 at a ration of 3 to 20% by weight based on the total of polymers; and

(c) a third stage in which the copolymer from the second stage is copolymerized with ethylene or ethylene and propylene in the presence of hydrogen with liquid propylene or in the absence of any substantial amount of a liquid hydrocarbon, at a concentration of propylene in the vapor phase, based on the total of propylene and ethylene in the vapor phase, less than 75 mol % and less than the said ratio in the second stage, to produce an ethylene-propylene copolymer having a melt flow index of less than 1 at a ration of 5 to 20% by weight based on the total polymers.

2) A process according to Claim 1 characterised in that said third stage polymerization is carried out substantially in the absence of any liquid hydrocarbon.

3) A process according to Claim 1 characterised in that said third stage polymerization is carried out in the presence of liquid propylene.

4) A process according to any preceding Claim characterised in that said concentration of propylene in the vapor phase in the third stage is in a range of 10 to 50 mol %.

5) A process according to any preceding Claim characterised in that said solid titanium trichloride catalytic complex comprises a titanium trichloride component, an aluminum halide component having the formula:

$$AIR^3_pX_{3-p}$$

wherein $R^3$ represent a $C_1$ - $C_{20}$ hydrocarbon moiety; X represents a halogen atom and $0 \leqq p \leqq 2$, and a complexing agent at a molar ratio of more than 0.001:1 based on titanium trichloride and aluminum halide.

6) A process according any preceding Claim characerised in that said solid titanium trichloride catalytic complex has an integrated micropore volume of more than 0.02 $cm^3$/g. in pore radii of 20 to 500Å measured by a mercury porosimeter.

7) A process according to any preceding Claim characterised in that said solid titanium trichloride catalytic complex is obtained by precipitation from a

solution of titanium trichloride in an ether or a thioether at a temperature of less than 150$^0$C.

8) A process according to any one of Claims 1 to 6 characterised in that said solid titanium trichloride catalytic complex is obtained by reducing titanium tetrachloride with an organoaluminum compound or a metallic aluminum and treating the resulting solit titanium trichloride with a complexing agent and a halide.

9) A process according to any preceding Claim characterised in that the atomic ration of Al to Ti in the catalyst complex is less than 0.02:1.

European Patent Office

# EUROPEAN SEARCH REPORT

Application number
EP 80 30 3514

## DOCUMENTS CONSIDERED TO BE RELEVANT

| Category | Citation of document with indication, where appropriate, of relevant passages | Relevant to claim |
|---|---|---|
| A | US - A - 4 039 632 ( J.T. EDMONDS)<br>* Claim 1; column 2, lines 32-50; column 3,*<br>-- | 1,5,9 |
| A | DE - A - 1 961 334 (MITSUBISHI)<br>* Claim 1; page 8, paragraph 2; page 9, paragraph 1 *<br>-- | 1,4,5 |
| A | CHEMICAL ABSTRACT, vol. 71, December 29, 1969, no. 13, page 26, abstract 125197s<br>Columbus, Ohio, USA<br>& JP - A - 69 20621 (MITSUI TOATSU CHEMICALS CO. LTD.) (04-09-1969)<br>* Whole abstract *<br>-- | 1,4,5 |
| P | JAPANESE ABSTRACTS, vol. 3, no. 157(C-68) December 22, 1979, page 103 C 68<br>& JP - A - 54 133587 (MITSUBISHI KASEI KOGYO K.K.) (10-17-1979)<br>* Whole abstract *<br>-- | 7 |

CLASSIFICATION OF THE APPLICATION (Int Cl.3)

C 08 F 297/08
4/64

TECHNICAL FIELDS SEARCHED (Int. Cl.3)

C 08 F 297/08
4/64

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 10-12-1980 | PEETERS J.C.J.J. |